# EUROPEAN PATENT SPECIFICATION

(11) **EP 3 321 381 B1**
(45) Date of publication and mention of the grant of the patent: **26.01.2022**
(21) Application number: 17195894.5
(22) Date of filing: 11.10.2017
(51) Int. Cl.: C21D 7/04, B23P 9/02, B23P 9/04, C21D 7/08, F01D 5/28

(54) **TREATED TAPERED ARTICLE AND METHOD OF TREATMENT FOR A TAPERED ARTICLE**
BEHANDELTE KONISCHE ARTIKEL UND VERFAHREN ZUR BEHANDLUNG FÜR EINEN KONISCHEN ARTIKEL
ARTICLE CONIQUE TRAITÉE ET PROCÉDÉ DE TRAITEMENT D'UN ARTICLE CONIQUE

(30) Priority: 11.11.2016 GB 201619092
(43) Date of publication of application: 16.05.2018
(73) Proprietor: Rolls-Royce plc, London N1 9FX (GB)
(72) Inventor: Lim, Andre, Derby, Derbyshire DE24 8BJ (GB); Castagne, Sylvie, Derby, Derbyshire DE24 8BJ (GB); Wong, Chow Cher, Derby, Derbyshire DE24 8BJ (GB); Maiti, Rajarshi, Derby, Derbyshire DE24 8BJ (GB); Gopinath, Abhay, Derby, Derbyshire DE24 8BJ (GB)
(74) Representative: Rolls-Royce plc

(56) References cited:
- EP-A1- 1 873 261
- EP-A2- 1 662 092
- EP-A2- 1 941 968
- EP-A2- 2 551 657
- WO-A1-2013/113302
- WO-A2-01/64398

## Description

The invention relates to a method of treating a metal aerofoil which tapers towards an edge, and a treated aerofoil.

Metal aerofoils may be susceptible to damage from external impacts and fatigue. For example, a metal blade or aerofoil for a gas turbine, may be susceptible to foreign object damage (FOD) or fatigue, which may promote crack growth. A metal aerofoil may be particularly susceptible to crack growth from an edge.

It is known to treat a region of an aerofoil to generate compressive residual stress to inhibit crack growth. Previously considered treatments are not suitable for an edge of a tapered aerofoil as they may result in excessive deformation of the edge, and because tool access to the edge may not be practical.

EP1941968 discloses a method of reducing crack propagation in an aerofoil, the method including burnishing the aerofoil so as to create at least one burnished section of residual compressive stress. The at least one burnished section is located adjacent a leading edge and spaced from the leading edge by an offset distance selected so as to avoid deformation of the leading edge

According to a first aspect there is provided an aerofoil as claimed in claim 1.

The intermediate region may be part of an untreated region including both the intermediate region and the edge region. In other words, the treatment region is treated by the application of the compressive force, whereas the compressive force is not applied in the intermediate region and the edge region such that they are untreated. The intermediate region may therefore be referred to as an intermediate untreated region. The intermediate region and the edge region may be subject to other treatments (such as heat treatments and conventional surface finishing), but may not be treated by the application of compressive force to generate compressive residual stress in the edge region.

Applying the compressive force to the treatment region may generate a region of tensile residual stress in the intermediate region between the treatment region and the edge region. It will be appreciated that the tensile residual stress may be generated in a sub-region of the intermediate region. In other words, the region of tensile residual stress may be a sub-region of the intermediate region.

A boundary between the intermediate region and the treatment region may be separated from the edge by at least 2.5mm along a direction perpendicular to the edge (i.e. the untreated region may extend at least 2.5mm away from the edge along a direction perpendicular to the edge).

4 A separation between opposing surfaces may define a thickness of the aerofoil. The maximum thickness may vary along the edge, and may be the maximum thickness of the aerofoil along a direction perpendicular to the edge.

The aerofoil may have a camber line, the maximum thickness in a respective chord-wise section of the aerofoil may be a maximum distance between opposing surfaces perpendicular to the camber line. The chord-wise section of the aerofoil may correspond to a portion of the edge and may therefore vary along the edge.

The method may comprise deep rolling to apply the compressive force. The method may comprise shot peening to apply the compressive force.

Applying the compressive force (i.e. by deep cold rolling) may comprise moving a roller element along a movement path having a plurality of path sections traversing back and forth over the treatment region along a principal direction substantially perpendicular to the edge. The principal direction may be a chord-wise direction or may be substantially parallel with a chord of the aerofoil.

At each point along the movement path there may be a respective contact area over which the roller element contacts the treatment region. The compressive force may be applied so that each path section of the movement path has a contact pathway defined by the contact areas along the respective path section, which contact pathway overlaps with a contact pathway of an adjacent path section.

The compressive force may be applied so that a width of the contact pathway is substantially equal to twice the separation between adjacent path sections. Accordingly, each portion of the treatment region between adjacent path sections may be rolled twice. The separation between the adjacent path sections may be the separation between the centrelines of the respective path sections.

Compressive force may be applied simultaneously to corresponding opposing treatment regions. For example, roller (axially-extending) or ball (spherical) elements may be coupled to a calliper tool extending around the aerofoil and configured to compress the aerofoil between the elements.

The aerofoil may be an element for forming the leading edge of a composite fan blade having a composite body.

The invention will now be described with reference to the accompanying drawings, in which:
Figure 1 schematically shows a compressor blade for a gas turbine;
Figure 2 schematically shows a portion of a surface of a compressor blade treated according to a previously considered treatment method;
Figure 3 schematically shows a portion of a surface of a compressor blade treated according to the invention;
Figure 4 schematically shows a distorted scale view of a large-aspect ratio portion of the compressor blade of Figure 3;
Figure 5 schematically shows an apparatus for treating the compressor blade of Figure 1;
Figure 6 schematically shows a cross-sectional view of the treated compressor blade of Figure 3 depicting regions of compressive and tensile stress;
Figure 7 schematically shows a treatment pathway for treating the compressor blade of Figure 1 using the apparatus of Figure 5; and
Figure 8 schematically shows a composite fan blade having leading edge and trailing edge metalwork.

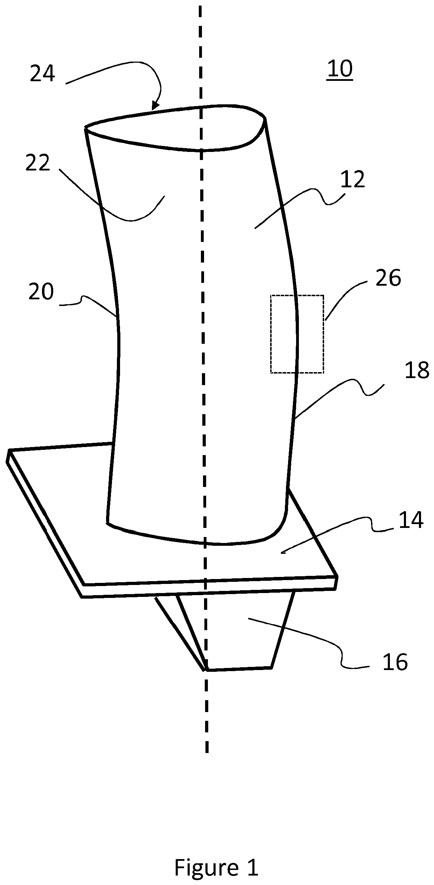

**Figure 1** shows a compressor blade 10 comprising an aerofoil portion 12, a platform 14 and a fir tree connector 16. The fir tree connector 16 is configured to slot into a disc of a gas turbine engine so that the aerofoil portion 12 extends substantially radially with respect to a rotational axis of the engine, and the platform 14 extends circumferentially and axially. The compressor blade 10 has a leading edge 18 and a trailing edge 20. The compressor blade 10 has a chord-wise direction extending from the leading edge to the trailing edge which is perpendicular to the radial or span-wise direction of the blade 10. In this example, the chord (i.e. the separation distance between the leading edge 18 and the trailing edge 20 along the chord-wise direction) varies along the span of the blade 10.

In this example, the compressor blade 10 is symmetrical, but other example blades may by non-symmetrical. The compressor blade has opposing aerodynamic surfaces 22, 24 extending between the leading edge 18 and trailing edge 20. The surfaces 22, 24 taper towards each of the leading edge 18 and the trailing edge 20 respectively.

In the following description, the terms leading edge and trailing edge are intended to take the standard meaning in the art. In particular, the leading edge is considered to be the foremost part of an aerofoil, whereas the trailing edge is the rearmost part. In this example, the leading edge 18 and trailing edge 20 are the forward and rear edges of the aerofoil to which the respective surfaces 18, 20 taper (i.e. the thinnest part towards the respective edge region along a direction perpendicular to the camber line of the aerofoil).

In this example, the compressor blade is an integral body comprising a titanium alloy, such as Ti-6Al-4V, but in other examples, a blade may comprise any other suitable material, such as nickel-based alloys including Inconel^{®} 718, Udimet ^{®} 718 and RR1000, and titanium-based alloys such as Ti6246.

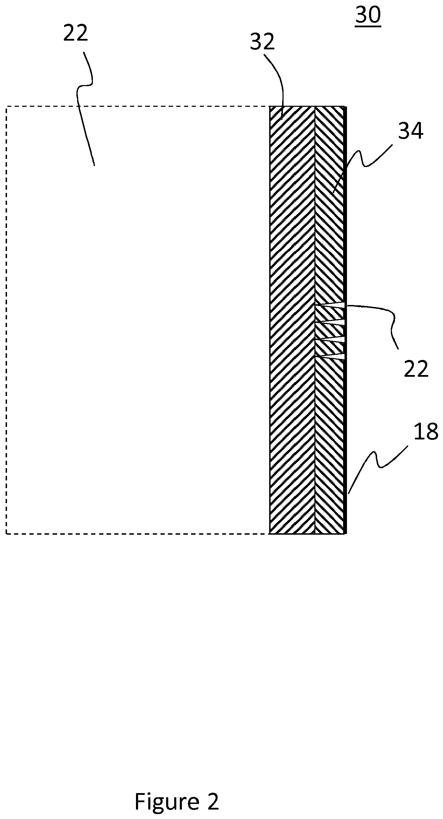

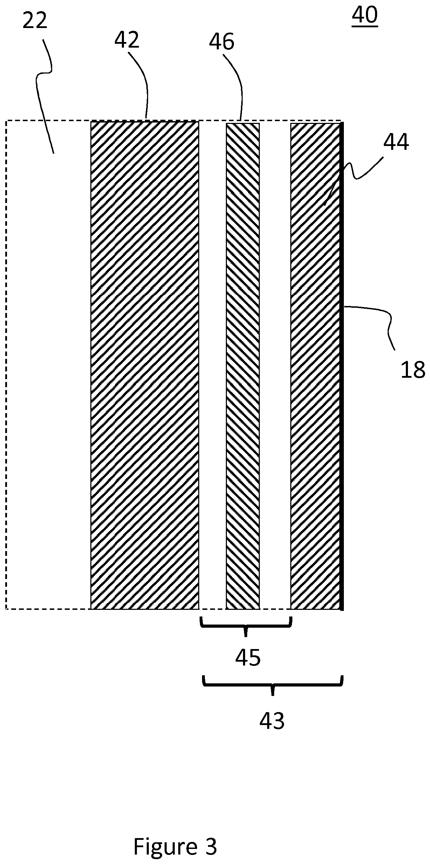

Figure 1 shows a view window 26 corresponding to a sub-region of the leading edge 18 and the adjacent aerodynamic surface 22 of the example compressor blade 10. Figures 2 and 3 show sub-regions of example compressor blades 30, 40, corresponding to the view window 26 of Figure 1.

**Figure 2** shows a sub-region of an example compressor blade 30 as described above with respect to Figure 1 and treated according to a previously considered method, as will be described in detail below.

As shown in Figure 2, there is a treatment region 32 extending substantially parallel to and spaced apart from the leading edge 18 of the blade. The treatment region 32 is treated to plastically deform the surface 22 of the blade with the effect of generating compressive residual stress within the treatment region 32. The treatment region 32 is spaced apart from the leading edge 18 to avoid inadvertent plastic deformation of the blade 30 in an untreated region immediately adjacent the leading edge 18. The region adjacent the leading edge may be both inherently thin owing to the tapering geometry, and susceptible to changes in aerodynamic performance if the geometry is altered.

A further limitation in treating this region relates to tool access to the region adjacent the leading edge 18. One technique of plastically deforming a surface is by the application of opposing rollers or burnishing balls to the surface. It will be appreciated that such rollers or balls engage a surface at a tangent to the surface. Owing to the curvature in the tapering region towards an edge, such rollers or balls contact each other before reaching the extreme edge, thereby limiting tool access to a region adjacent such an edge. In previously considered methods, the inaccessible region may extend approximately 0.3mm away from the edge.

Treatment of the treatment region 32 generates tensile residual stress in a tension region 34 extending from the leading edge 18 to the treatment region 32.

As shown in Figure 2, cracks 22 may form in the leading edge 18 and propagate chord-wise away from the leading edge through the tension region 34. However, crack growth is inhibited at the treatment region 32 owing to the compressive residual stress in the treatment region 32. In such methods, the treatment region 32 is disposed as close as possible to the leading edge 18 (for example, in view of tool access and undesirable deformation of the aerofoil) in order to limit the extent of crack growth. Nevertheless, the region adjacent the leading edge 18 remains under tensile residual stress.

**Figure 3** shows a sub-region of an example compressor blade 40 as described above with respect to Figure 1 and treated according to a method according to the invention, as will be described in detail below. The sub-region corresponds to the window 26 of Figure 1.

A treatment region 42 spaced apart from the leading edge 18 is treated to plastically deform the aerodynamic surface 22 in the treatment region 42, thereby generating compressive residual stress in the treatment region 42. In this example, compressive force is applied to the treatment region 42 by deep cold rolling, for example with a burnishing ball as will be described in detail below, although other suitable techniques may be used. The treatment region 42 is spaced apart from the leading edge 18 along a direction perpendicular to the leading edge 18.

An untreated region 43 extends from the leading edge 18 to the treatment region 42 along a direction substantially perpendicular to the edge. Unlike the treatment region 42, the untreated region 43 is not treated with compressive force to generate compressive residual stress within the same region.

The application of compressive force in the treatment region 42 of the tapering metal aerofoil results in the generation of a further region of compressive residual stress adjacent the leading edge 18, which region is referred to herein as the edge region 44. The edge region 44 of compressive residual stress is separated from the treatment region 42 by an intermediate region 45.

In this example, the application of compressive force in the treatment region 42 further results in the generation of a tensile region 46 (i.e. a region of tensile residual stress) within the intermediate region 45 that separates the edge region 44 and the treatment region 42.

Accordingly, compressive residual stress is generated in the edge region 44 adjacent the leading edge 18 without the direct application of compressive force to plastically deform the edge region. In contrast, the applicant has determined that, in a tapering metal aerofoil, compressive residual stress can be generated in an edge region 44 adjacent an edge 18 by the application of compressive force in a treatment region 42 separated from the edge region by an intermediate region 45. In this example, the intermediate region 45 (like the edge region 44) is untreated, and contains a tensile region 46 of tensile residual stress.

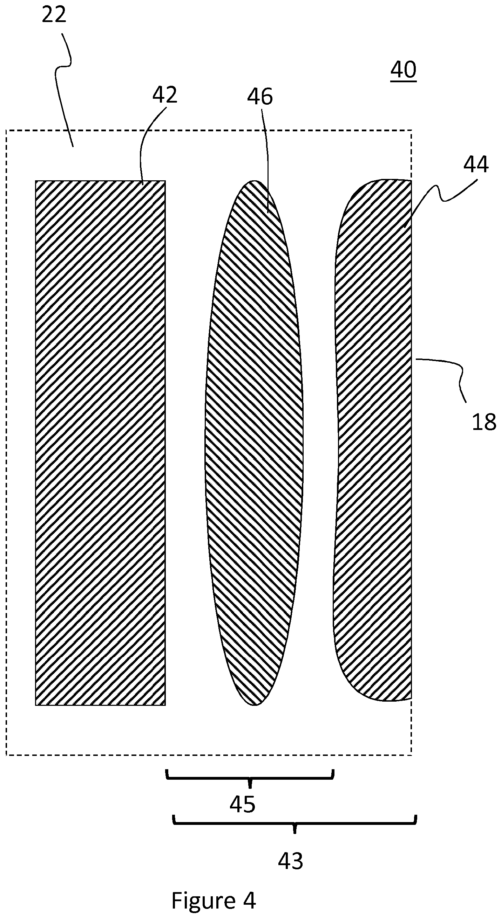

**Figure 4** shows a further partial view of the example compressor blade 40 of Figure 3. Figure 4 shows a distorted scale view depicting the full span-wise extent of the aerodynamic surface 22 but only a limited chord-wise extent of the surface 22 extending from the leading edge 18. As shown in Figure 4, the shape of the tensile region 46 and edge region 44 may not be rectilinear. In this example, the edge region 44 of compressive residual stress has a span-wise border offset from the leading edge which curves towards the leading edge 18 over a central span-wise region of the blade. In this example, the tensile region 46 is substantially elliptical, having its greatest chord-wise extent over a substantially central span-wise region of the blade. As shown in Figure 4, both the tensile region 46 and the edge region 44 have a span-wise extent which substantially corresponds to the span-wise extent of the treatment region 42. In this example, the treatment region 42 is substantially rectilinear.

It will be appreciated that in other examples the particular shapes of the edge region 44 of compressive residual stress and the tensile region 46 may be different; for example such shapes may depend on both the shape of the treatment region 42 and the compressive force treatment applied to it, and the geometry of the tapering blade.

In some examples, there may be a region of tensile residual stress adjacent the edge region 44 with respect to the span-wise direction and adjacent the leading edge 18. There may be two such regions at each span-wise end of the edge region 44.

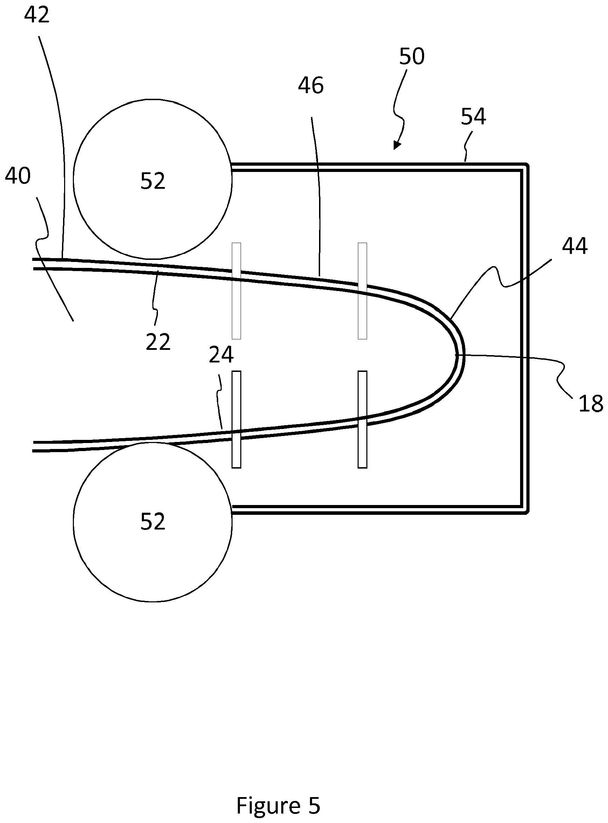

**Figure 5** shows a further partial view of the compressor blade 40 of Figures 3 and 4. Figure 5 shows a partial chord-wise cross-sectional view of a portion of the compressor blade 40 showing opposing aerodynamic surfaces 22, 24 tapering towards the leading edge 18. It will be appreciated that the opposing surfaces 22, 24 taper in a similar manner towards the trailing edge 20.

Figure 5 schematically shows the treatment region 42, tensile region 46 and edge regions 44 as overlaid lines on the respective surfaces 22. As can be seen from Figure 5, the edge region 44 is adjacent to and extends through the leading edge 18 onto the opposing surface 24, such that over a principal span-wise extent of the compressor blade 40, the leading edge 18 lies within the edge region 44 of compressive stress. A principle span-wise extent may be a significant portion of the span, such as at least 20%, at least 50%, or at least 70% of the span of the edge.

In this example, the treatment region 42 and the untreated region are substantially mirrored on opposing surfaces 22, 24 of the blade. As shown in Figure 5, there are opposing tensile regions 46 and treatment regions 42.

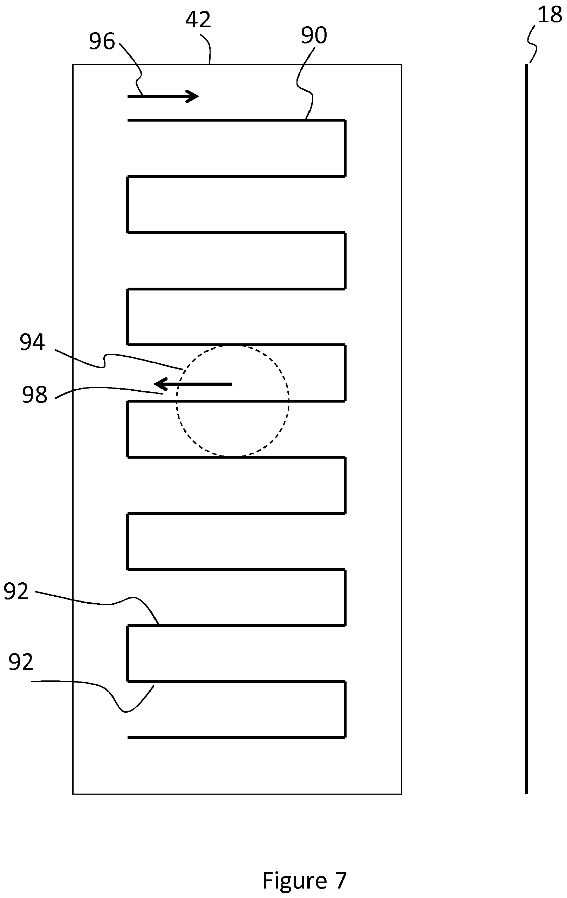

Figure 5 further shows an example apparatus 50 for applying compressive force to the treatment regions 42 on opposing surfaces 22, 24 of the blade 40. In this example, the apparatus 50 comprises a pair of burnishing balls 52 mounted on a moveable calliper arm configured to press the burnishing balls 52 towards each other and against the blade 40 to apply compressive force to the treatment region, as will be described in detail below with respect to Figure 7.

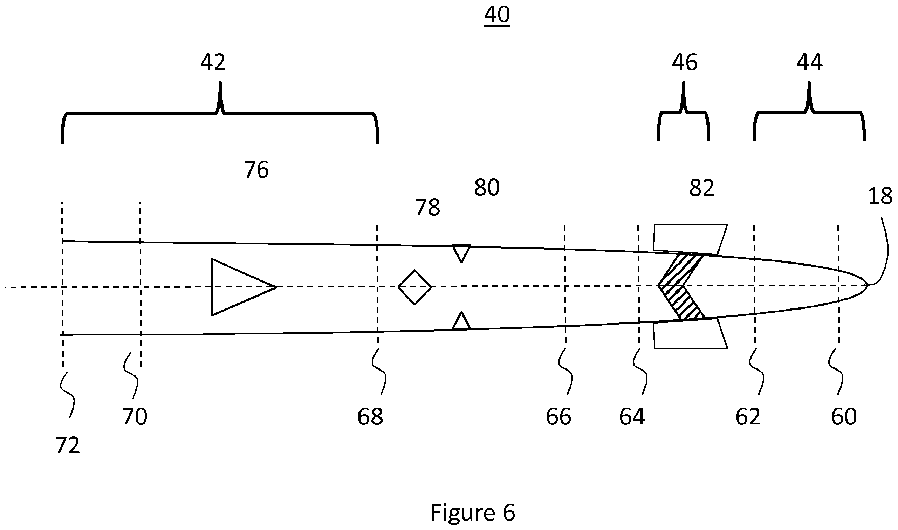

**Figure 6** shows an example plot of regions of residual stress within the blade 40 described above with respect to Figures 3-5. As described above, the applicant has determined that the application of compressive force to a treatment area of a tapering aerofoil away from a respective edge generates a pattern or field of residual stress in the aerofoil. As described above with respect to Figures 3-5, an example pattern includes a compressive residual stress in the treatment region 42, a tensile region 46 between the treatment region 42 and the edge 18, and an edge region 44 of compressive stress adjacent (and extending over) the edge 18. In other words, in the example pattern there is a region of tensile residual stress separating the treatment region 42 (of compressive residual stress) and the edge region 44 of compressive residual stress.

Whilst Figures 3-5 depict the regions of tensile and compressive stress at the opposing surfaces 22, 24, Figure 6 shows regions of compressive and residual stress along a representative chord-wise cross section of the blade tapering towards the leading edge 18. Figure 6 shows a succession of chord-wise locations sequentially offset from the leading edge. In this example, the chord-wise extent of the representative portion of the blade is approximately 40mm, and a region of approximately 10mm is shown in Figure 6. The average residual stress at each of the chord-wise locations 60-72 is shown in Table 1 below, in order of chord-wise separation from the leading edge and by reference to the reference numeral (or "location ID") used for the respective location in Figure 6. The residual stress values shown in Table 1 relate to the average residual stress through the thickness of the blade 40 at the respective chord-wise location.

**Table 1**

| Location ID | Separation from Leading Edge (mm) | Residual Stress (MPa) >0 Tensile; <0 Compressive |
|---|---|---|
| 60 | 0.5 | -300 |
| 62 | 1.5 | -150 |
| 64 | 2.5 | 0 |
| 66 | 3.5 | -150 |
| 68 | 5.5 | -600 |
| 70 | 8.0 | 300 |
| 72 | 10.0 | 450 |

Further residual stress values corresponding to selected zones or regions in the cross-section of Figure 6 are shown in Table 2 below, together with the respective separation from the leading edge 18. The magnitude of the compressive stress in the selected zones of Table 2 is generally greater than the average values reported in Table 1, indicating the three-dimensional nature of the residual stress pattern imparted in the blade 40 owing to the application of compressive force in the treatment region 42.

**Table 2**

| Location ID | Separation from Leading Edge (mm) | Residual Stress (MPa) >0 Tensile; <0 Compressive |
|---|---|---|
| 76 | 7.5 | -1100 |
| 78 | 5.0 | -900 |
| 80 | 4.5 | -900 |
| 82 | 2.0 | >0 |

As shown in Figure 6, the chord-wise region between location IDs 72-68 corresponds to the treatment region 42, whereas the region between chord-wise locations 62 and the leading edge 18 corresponds to the edge region 44.

In some examples, the residual stress value may be directional. In this example, the residual stress values and relative definitions referred to in the above description relate to the residual stress along the span-wise axis of the blade. The applicant has found that it may be beneficial to maximise compressive residual stress along a direction substantially parallel with a respective edge (in this example, the span-wise direction) to resist crack opening.

In this example, residual stress values are obtained by finite element analysis (FEA) and may be calibrated by empirical testing, for example using digital image correlation and/or focused ion beam analysis, as is known in the art.

The particular values described above above relate to an example compressor blade 40 having a symmetrical elliptical profile having a chord-wise extent of approximately 40mm, a maximum thickness of 2mm, and a span-wise extent of 50mm. In this example, the treatment region has a span-wise extent of approximately 10mm and a chord-wise extent of approximately 5mm. The chord-wise separation between the leading edge and the centre of the treatment region is approximately 5.0mm (between 2.5mm and 7.5mm from the tip, in this example). The edge region of compressive residual stress has a chord-wise extent of approximately 1.5mm. The region of tensile residual stress is contiguous with the edge region and extends towards the treatment region.

However, it will be appreciated that the invention applies to blades and metal aerofoils of other geometries which taper towards an edge.

In particular, in other examples the separation (or offset distance) between the treatment region 42 and the leading edge 18 may be greater or less. For example, the chord-wise separation distance between the leading edge 18 and the treatment region may be at least 2.5mm, for example 5mm, 7.5mm or 10mm. Geometric parameters, such as at least the span, chord, thickness shape and material may vary between example aerofoils to which the treatment method can be applied.

A particular method of applying compressive force to the treatment region 42 will now be described with respect to **Figure 7**. Figure 7 shows the treatment region 42 of the example compressor blade 40 described above with respect to Figures 3-6, offset in the chord-wise direction relative the leading edge 18.

Figure 7 schematically shows a simplified movement path 90 for a burnishing ball for applying compressive force to the treatment region 42 by deep cold rolling. The movement path 90 defines the path of movement of a central contact point of the burnishing ball over the treatment region. As shown in Figure 7, the movement path comprises a plurality of path sections 92 that traverse back and forth over the treatment region 42 along a chord-wise axis, alternately towards and away from the leading edge 18. Arrow 96 indicates initial movement of the burnishing ball along the movement path 90 in a chord-wise direction towards the leading edge 18. Successive path sections 92 are connected by span-wise sections. The applicant has determined that movement of the burnishing ball along a principal axis substantially perpendicular to the span may maximise residual stress along the span-wise direction (where the principle direction corresponds to an axis which is parallel to the longer path sections, rather than the shorter interconnecting sections).

As will be appreciated, the burnishing ball has a contact area (rather than merely a contact point along the movement path 90) over which it contacts the surface 22 of the aerofoil within the treatment region 42 to plastically deform it. The contact area may depend on the force applied, material properties of the burnishing ball and the aerofoil, and may be determined using numerical simulation, for example by static or dynamic FEA.

Figure 7 shows a circular contact area 94 of the burnishing ball centred on the movement path, at a representative point along the movement path. In this example, the movement path and contact area are such that the radius of the contact area is substantially equal to the separation (i.e. the span-wise separation, in this example) between adjacent path sections 92. Accordingly, the burnishing ball traverses over the treatment area in an overlapping manner such that each portion of the treatment region between is compressively loaded by the ball twice. Movement of the burnishing ball results in a contact pathway corresponding to the cumulative respective contact areas of the burnishing ball at each point along the movement pathway. Accordingly, the portion of the contact pathway associated with each path section 92 overlaps a respective contact pathway associated with an adjacent path section 92. It will be appreciated that, in practice, the compressive force may be controlled based on a target contact area, or otherwise the movement path may be dynamically adjusted as the contact area varies.

An example burnishing ball may be between 5 and 15mm in diameter, for example. An example compressive force loading through the burning ball may be between 30 and 60 MPa, for example. An example burnishing ball may comprise a high strength material, such as tungsten carbide.

In the context of a rotary machine such as a gas turbine, it will be appreciated that the span-wise axis may substantially correspond to a radial axis of the rotary machine (i.e. a radial axis extending orthogonally from an axis of rotation).

Although an example of the invention has been described with respect to a metal aerofoilcompressor blade, it will be appreciated that the invention applies equally to other aerofoils. For example, the invention may be embodied by any type of metal member or aerofoil, such as fan blades and turbine blades.

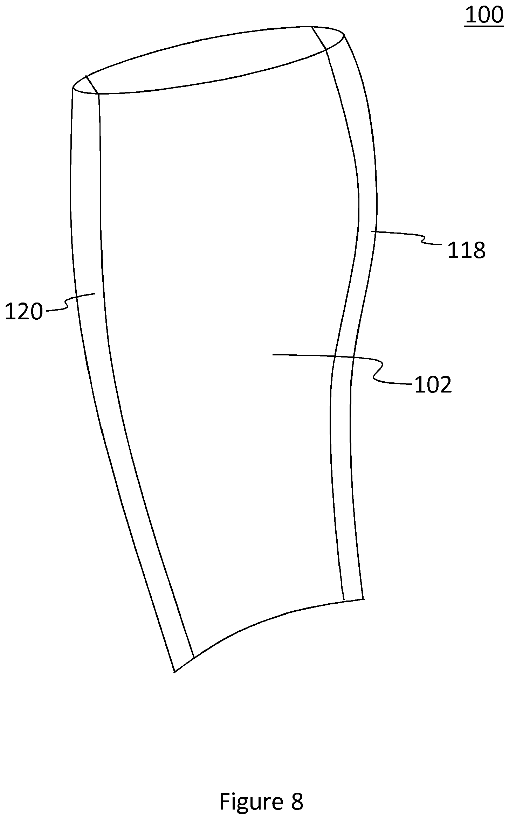

Figure 8 shows an example composite fan blade 100 including an aerofoil body 102 comprising composite material (e.g. carbon fibre reinforced plastic) and protective edge metalwork. The edge metal work includes a leading edge member 118 and a trailing edge member 120 defining the leading edge and trailing edge of the fan blade 100 respectively. For example, the leading edge and trailing edge members 118, 120 may be bonded onto the aerofoil body 102. The leading edge and trailing edge members taper towards the leading edge and trailing edge respectively and may be treated by a treatment method as described above with respect to Figures 3-7. In further examples, the invention may apply to propeller blades, such as marine propellers..

Whilst the expressions "chord-wise" and "span-wise" have been used in the above description in the context of a metal aerofoil comprising an aerofoil, in the context of non-aerofoil examples to which the invention applies, such terms can be interpreted as follows. In the context of a non-aerofoil component, references above to "chord-wise" can be interpreted to mean a longitudinal direction extending substantially perpendicular to the edge (i.e. the edge towards which the aerofoil tapers and where compressive stress is to be generated without direct application of force). For example, the longitudinal direction may extend from the edge to an opposing edge. In the context of a non-aerofoil component, references above to "span-wise" can be interpreted to mean a direction extending substantially parallel with the respective edge. These interpretations also apply to aerofoil components.

Whilst the invention has been described with respect to a particular treatment technique for the generation of residual stresses (deep cold rolling), it will be appreciated that other treatment techniques may be used, such as high intensity shot peening.

The terms "treated region" and "treatment region" may be used interchangeably with respect to an aerofoil that has been treated.

## Claims

1. A metal aerofoil which tapers towards an edge, the aerofoil comprising:
a treated region of compressive residual stress (42);
an edge region of compressive residual stress (44) extending from the edge;
wherein the treated region is separated from the edge region by an intermediate region (45) disposed between the treated region and the edge region, the intermediate region comprising a region of tensile residual stress (46); wherein the treated region is spaced apart from the edge by at least 2.5mm along a direction perpendicular to the edge .

2. An aerofoil according to claim 1, wherein the edge is a leading edge of the aerofoil.

3. An aerofoil according to claim 1 or 2, wherein the aerofoil is selected from the group consisting of a compressor blade, turbine blade, fan blade, propeller blade.

4. An aerofoil according to any preceding claim, wherein the aerofoil is an element for forming the leading edge of a composite fan blade having a composite body.

## Patentansprüche

1. Metallschaufelprofil, das sich zu einer Kante verjüngt, wobei das Schaufelprofil Folgendes umfasst:
einen behandelten Bereich mit Restdruckspannung (42);
einen Kantenbereich mit Restdruckspannung (44), der sich von der Kante erstreckt;
wobei der behandelte Bereich von dem Kantenbereich durch einen Zwischenbereich (45) getrennt ist, der zwischen dem behandelten Bereich und dem Kantenbereich angeordnet ist, wobei der Zwischenbereich einen Bereich mit Restzugspannung (46) umfasst; wobei der behandelte Bereich von der Kante um zumindest 2,5 mm entlang einer Richtung senkrecht zu der Kante beabstandet ist.

2. Schaufelprofil nach Anspruch 1, wobei die Kante eine Vorderkante des Schaufelprofils ist.

3. Schaufelprofil nach Anspruch 1 oder 2, wobei das Schaufelprofil ausgewählt ist aus der Gruppe bestehend aus einer Verdichterschaufel, Turbinenschaufel, Bläserschaufel, Propell erschaufel.

4. Schaufelprofil nach einem vorhergehenden Anspruch, wobei das Schaufelprofil ein Element zum Bilden der Vorderkante einer Verbundbläserschaufel mit einem Verbundkörper ist.

## Revendications

1. Profil aérodynamique métallique qui se rétrécit vers un bord, le profil aérodynamique comprenant :
une zone traitée de contrainte résiduelle de compression (42) ;
une zone de bord de contrainte résiduelle de compression (44) s'étendant à partir du bord ;
ladite zone traitée étant séparée de la zone de bord par une zone intermédiaire (45) disposée entre la zone traitée et la zone de bord, la zone intermédiaire comprenant une zone de contrainte résiduelle de traction (46) ; ladite zone traitée étant espacée du bord d'au moins 2,5 mm le long d'une direction perpendiculaire au bord.

2. Profil aérodynamique selon la revendication 1, ledit bord étant un bord d'attaque du profil aérodynamique.

3. Profil aérodynamique selon la revendication 1 ou 2, ledit profil aérodynamique étant sélectionné dans le groupe constitué d'une aube de compresseur, d'une aube de turbine, d'une pale de soufflante, d'une pale d'hélice.

4. Profil aérodynamique selon une quelconque revendication précédente, ledit profil aérodynamique étant un élément pour former le bord d'attaque d'une pale de soufflante composite possédant un corps composite.
